# EUROPEAN PATENT APPLICATION

(11) **EP 0 891 066 A2**
(43) Date of publication of application: **13.01.1999**
(21) Application number: 98660070.8
(22) Date of filing: 09.07.1998
(51) Int. Cl.: H04M 1/00, G06F 3/033

(54) **Adaptable menu-controlled man-machine interface.**

(30) Priority: 09.07.1997 FI 972908
(71) Applicant: NOKIA MOBILE PHONES LTD., 02150 Espoo (FI)
(72) Inventor: Huomo, Heikki, 02320 Espoo (FI); Vänttilä, Jaakko, 90830 Haukipudas (FI)
(74) Representative: Brax, Matti Juhani

(57) **Abstract**

In an electronic device, such as a mobile station equipped with a small display (41), a certain menu of the most used functions is used to control the device. In this menu, either the user collects the most often used functions (B₁ - B_{N}) or the device selects the functions automatically (A₁ - A_{N}), depending on which functions the user uses most often. This menu is located high in the hierarchy of menus, so that opening the menu and selecting the functions included in it can be done quickly and easily. The functions can contain links to the functions which according to the frequency array (45e) are most often used after a certain function.

## Description

The invention relates to the interface between a user and an electronic device, the so called man-machine interface in general, and to adapting a menu-based interface to the personal requirements of the user in particular. The most advantageous application of the invention is in mobile phones with a display, but it can also be used in other electronic devices.

Many modern electronic devices are designed as menu-controlled. In the following, a digital mobile station with a display is described by way of example, but with certain generalizations, the description also pertains to many other kinds of devices. Because the display of the mobile station is small, it can only display a very small menu with a limited number of options at a time. In order to implement a wide range of control possibilities, the menus are divided into several levels, forming a hierarchical tree structure. On the upper level, the user selects a certain group of functions, whereby a number of lower level operations belonging to the selected group is shown on the display. The most common way of expressing the selection is to use certain control and function keys. In this patent application, the entity formed by the display, menus and keys is called the Man Machine Interface (MMI).

A typical MMI of a mobile station and the tree structure of its menus is known, for example, from the operation manual of the Nokia 2110 mobile station published by Nokia Mobile Phones. The user can perform a large number of different selections controlling the operation of the mobile station by using three or four control keys. However, the large number of consecutive keystrokes needed is often a problem. As an example, we can imagine a situation in which the user wants to change the alarm sound from an ordinary alarm to a mere beep. The user presses the Menu key and then selects the option corresponding to the alarm sound by arrow keys. With a certain Start key, the user can display the various possibilities for the alarm sound, from which he selects the desired alternative by pressing the arrow keys. To confirm the selection, the OK and Exit keystrokes are still needed. Seven keystrokes, including all the four control keys, are needed to complete the entire procedure. Because of meetings or other occasions where a different telephone behaviour is required, the user may have to change the alarm sound several times during the day, in which case he may find the long series of keystrokes frustrating.

A few prior art solutions to the problem described above are known. For example, the user of the Nokia 2110 mobile station can memorize the numbers of the most frequently used menus and functions, whereby he can get the desired function on the display by pressing the Menu key and selecting the correct number with the numeric keys of the mobile station. However, this solution requires menorizing numbers with as much as five digits, which is not suitable for all users. The Motorola Micro T.A.C 8400 has a corresponding system, in which the numbers of the nine functions regarded as the most common have only one digit, whereby the user selects the desired function by pressing a certain arrow key and one numeric key 1-9. Motorola's solution does not help a user who often needs a function which was not regarded as common by the manufacturer, who has therefore not added it to the quick selections. Besides, even memorizing one-digit numbers correctly is difficult for many users.
(*) Registered trademark of the Motorola Company

The patent application GB-2 293 951 discloses a mobile station and a menu system for using it, consisting of branches equipped with titles, subtitles, sub-subtitles and selections. The user can either browse a short menu, which contains only some of the titles, or a long menu, which contains all the titles. By using certain series of keystrokes, the user can also move titles from the short menu to the long menu or vice versa. In this solution, the user must be able to use complicated key commands of the mobile station.

The patent specification FI-89652 and a corresponding United States patent US-5 267 308 describe a telephone memo, in which the mobile station sorts the telephone numbers in an order according to the frequency of use. However, in order to start using the telephone memo, the user must use menu commands as usually, and so this solution does not make the problem of the present menu-based MMI any easier. Some methods for adapting menu-based interfaces to the user's requirements are known from software intended for personal computers. In many programs of the Microsoft company, a certain menu includes a list of recently accessed files, whereby the user can open the file by selecting its name from the menu. However, the frequently used function or file is not always the same as the one that was used last; if the user handles dozens of files a day, only a few of which are needed often, their names may be dropped from the list when the user accesses other files. It is also a known technique that the user can remove commands he regards as unnecessary from the program menus and add new commands based on self-made macros. However, the large display of a personal computer allows using large menus with many different alternatives, and thus the known solutions cannot as such be applied to devices such as mobile stations, which have a small display with a modest resolution. Even if the user of a mobile station can add the desired commands to a certain menu of the prior art kind, he would nevertheless either have to browse the menu with the function keys to find the desired option or remember the number of the option added, whereby no real advantage compared to the prior art would be achieved.

The object of this invention is to present a method by which the user can select the desired options by means of a menu-based MMI quickly and easily. It is also an object of the invention to present a method by which the quick use of a menu-based interface can be modified to correspond to the different needs of the users. In addition, it is an object of the invention to present an electronic device, in which the control method according to the invention is used.

The objects of the invention are achieved by adding to the menu-based MMI a special menu of the often needed functions and by selecting the options of this menu according to the user's needs.

The method according to the invention is characterized in that as a response to the user's operation, certain options intended to be the most easily selected are collected to a certain menu.

The invention also relates to a man-machine interface for controlling the electronic device. The interface according to the invention is characterized in that it comprises a certain menu for showing the options which the user wants to be the most easily selected, whereby the options contained in the menu are determined on the basis of the user's operation.

According to the invention, a new menu branch is added on a suitable level of the branched, tree-like menu structure, preferably on the upmost level, for the most frequently used functions. Most advantageously, the new menu is located high up in the hierarchical menu structure, so that opening or displaying it does not require many keystrokes. Alternatively, it is possible to specify a certain simple key command, by which the user can always display the menu of the most frequently used functions regardless of the level on which the menu is located and which other part of the menu structure is displayed at the beginning. In the following, the menu of the frequently used functions is called the MUM (Most Used Menu) for shortness.

In order that the MUM would be useful for the user in all situations, the user must be able to influence the contents of the menu. A MUM according to the invention can either be updated automatically, whereby the mobile station or other device in question itself records the frequency of various operations and produces the selections corresponding to the most often used functions to the menu according to the invention, or the user can determine the contents of the menu by using key commands. Various compromises can also be formed of these two alternatives, whereby the user, for example, selects the functions contained in the menu. but the device arranges the menu so that the most often used function is always the first in the menu. The MMI can also include a function in which the user selects which procedure he wants to use for maintaining a MUM menu according to the invention.

In the embodiment of the invention in which the user selects the functions to be included in the menu according to the invention by key commands, the functions selected need not be the most often needed functions. The user can also place a rarely needed function in the MUM for it to be available as easily as possible when quick action is required.

In the following, the invention will be described in more detail with reference to the exemplary embodiments and the appended drawings, in which
- Figure 1a: shows the proceeding of an embodiment of the method according to the invention as a state diagram,
- Figure 1b: shows the maintenance of the MUM in the case of Figure 1a,
- Figure 2a: shows the maintenance of the MUM in another case,
- Figure 2b: shows the proceeding of a second embodiment of the method according to the invention as a state diagram,
- Figure 3: shows the proceeding of a third embodiment of the method according to the invention as a state diagram, and
- Figure 4: shows a block diagram of a mobile station according to the invention.

In the figures, the same reference numbers are used for corresponding parts.

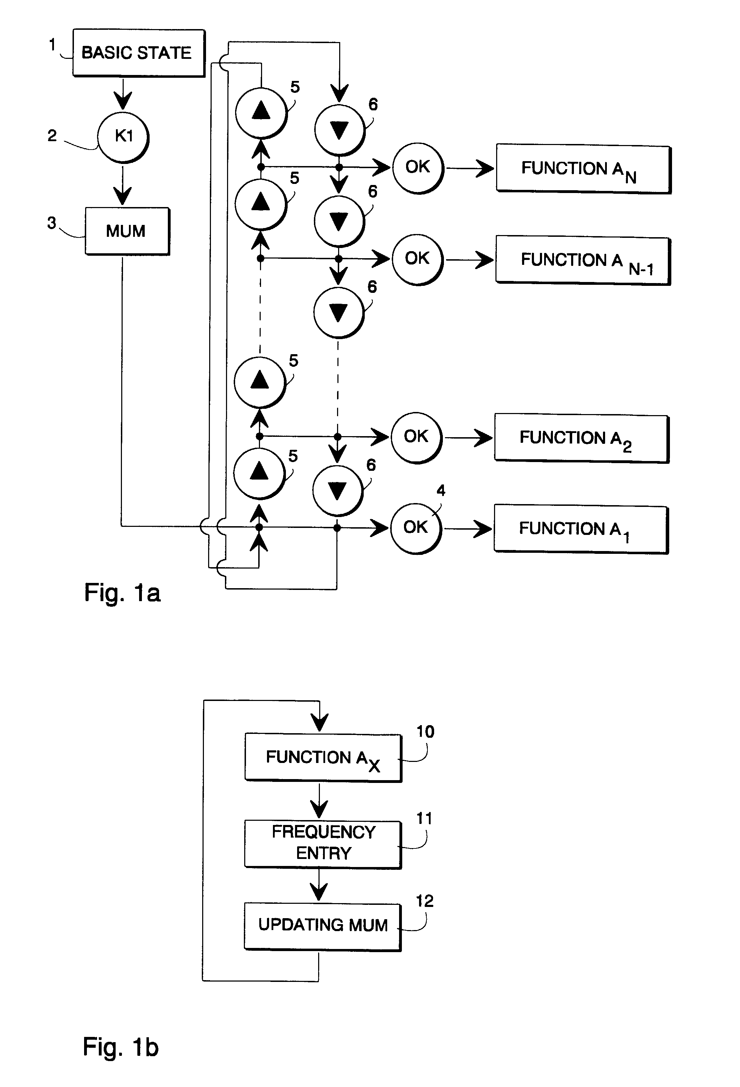

Figure 1a shows a state diagram, in which rectangles are used to depict the states of the controlled electronic device and circles to depict the key commands by which the state is changed. With regard to the invention, it does not matter in which state the user starts using the Most Used Menu. The text "basic state" used to describe state 1 in the figure means this starting state. At point 2, the user gives a certain key command K1, such as a long press of the Menu key. By this command, the device is switched to the MUM state 3, in which it shows the user the alternatives in the Most Used Menu. To advantage, the display of the device has a cursor or other pointer to indicate which of the menu alternatives has been selected. In state 3, the cursor indicates the first function of the MUM, which is here called function A₁, and which the user can perform by pressing the OK key at point 4. The other functions of the menu from A₂ to AN require moving the cursor at the desired function by pressing the up and down arrow keys 5, 6 before pressing the OK key. Using the menu by the arrow and OK keys is a technique known as such. The invention does not limit the number of functions in the Most Used Menu.

Figure 1b shows the formation and maintenance of the Most Used Menu in the case that the device which is the object of the invention performs the procedures relating to the formation and maintenance automatically. Forming a user-specific menu for use according to the invention requires that a certain capacity is reserved for this in the memory of the device. In an embodiment in which the device updates the Most Used Menu automatically, the memory of the device must also contain an array which describes the frequency of the functions performed through the menus. Always when the user selects a certain function from a menu, as in block 10, the device adds an entry to the frequency array at the function as in block 11 and updates the Most Used Menu, or fills it with the most used functions in the array, as in block 12. In this embodiment, the device only records the lowest level functions of the menus and not the menus or submenus, because otherwise the upper level menus would be automatically the most often used; they are used frequently when the user moves through them to the lower menu levels. The functions from A₁ to AN are here ordered according to the frequency of use.

For saving calculation capacity, filling the Most Used Menu, the operation of block 12, can be conditional so that it takes place only when as a result of an entry made in the frequency array, the observed frequency of use of a function in the array becomes higher than a certain threshold value, for instance three times a day. Operation according to block 12 can also take place at a specified time, whereby the device can update the Most Used Menu once in an hour, for example.

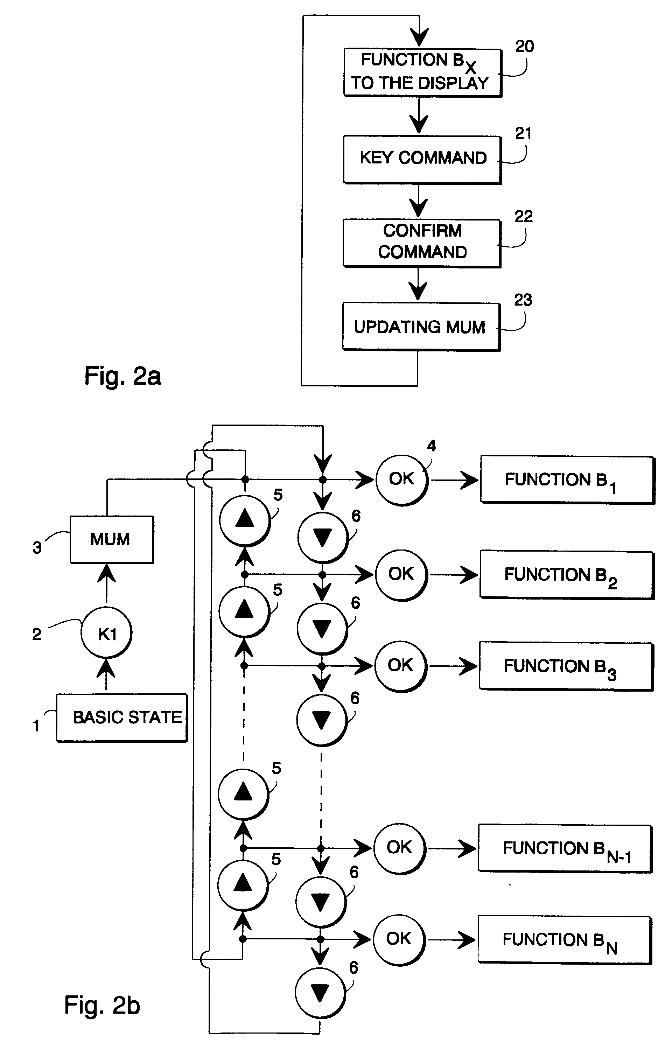

In an embodiment, in which the user determines the contents of the MUM manually, adding a certain operation to the array takes place according to Figure 2a, for instance. The user retrieves the text indicating the desired function according to block 20, in a well known manner. After this, the user gives a certain key command according to block 21, such as a long press of the OK key. The device can add the function to the MUM directly or ask the user to confirm this by pressing the OK key again, as in block 22. After the confirm command, the device adds the function to the MUM, as in block 23. In an embodiment based on manual maintenance, the function to be added to the MUM can be a function of the lowest level of the menus or a certain menu or submenu. The order of the functions B₁ - B_{N} is determined by which function the user wants to be the most easily accessible (with the fewest keystrokes) (B₁), which the next easily accessible (B₂) and so forth. From Figure 2b it can easily be seen how many keystrokes are required by each function.

One simple way by which the user can determine a certain place for a desired function in a manually maintained Most Used Menu, is using the numeric keys instead of or in addition to the OK key when the user accepts the desired function to the Most Used Menu. It can be assumed, for instance, that the user wants a certain function to appear as the second in the MUM (function B₂ in Figure 2b). When the user selects this function according to Figure 2a, he gives a long press of the OK key at block 21 and presses the numeric key 2 at block 22. It is also possible to present a combined embodiment, in which the user selects which functions should be included in the MUM, but the terminal device determines the mutual order of the functions automatically so that the most frequently used of the functions selected by the user is the first in the MUM, the next frequently used is the second and so forth.

In the preferred embodiment of the invention, removing functions from the MUM is done in the same way as adding functions, as shown in Figure 2a. The user retrieves the MUM to the display, moves the cursor at the function which he wants to remove, and gives a long press of the OK key. The device can remove the function from the MUM directly or at first ask the user to press the OK key again for confirmation. If the Most Used Menu is full, but the user tries to add one more function to it, the device can either notify that the menu is full and ask the user to remove a function, or it can automatically remove the last or least used function from the menu.

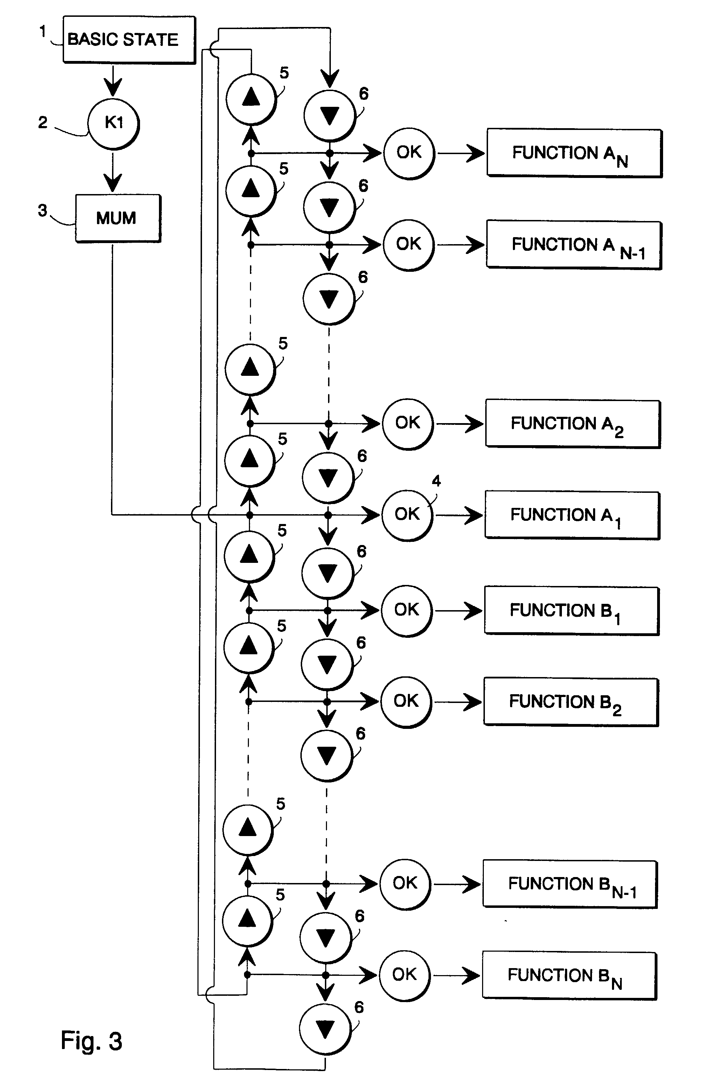

Figure 3 shows a combination of the embodiments described above. The functions from A₁ to AN are functions of the MUM, which the device has included in the MUM according to their frequency of use, like in the case of Figures 1a and 1b above. The functions from B₁ to B_{N} have been added to the MUM manually by the user in the same way as in the case of Figures 2a and 2b. When the user has reached the MUM state 3, he can start function A₁ by pressing the OK key or browse the list of A functions or B functions by pressing the arrow keys 5 and 6. Like in Figures la and 2b, the functions of the MUM form a loop-like list, which means that after pressing a certain arrow key consecutively as many times as there are functions in the MUM, the user is at the same point in the menu as before the keystrokes on the arrow key. There is no advantage in keeping a certain function in the MUM in more than one place. If, for instance, the user has selected function B₄ in the MUM and uses it so often that the device includes it in the A functions, such as function A₂, it is advantageous to skip this function in the B group, whereby one press of the arrow key moves the cursor in the MUM directly from B₃ to B₅ or vice versa. It is also possible to present an embodiment as in Figure 3, in which the device does not include in the A functions any of the functions selected by the user manually in the MUM as a B function.

The functions of the Most Used Menu can also contain links to other functions, particularly in an embodiment in which the device automatically measures the frequency of occurrence of various functions. It is namely typical of certain situations that the user must make many consecutive changes of operation. For example, a mobile phone user who is leaving a meeting often wants to switch the sound alarm and key sounds on and the call transfer off. The most often used of these functions is switching the sound alarm, and thus it is likely to be included in the MUM with the highest priority. When the user accepts the switching on of the sound alarm by pressing the OK key, the mobile station detects that in a certain frequency array modelling the sequence of functions, the switching of the sound alarm is often followed by the switching of the key sounds. Thus the device automatically moves the cursor in the display to indicate the switching of the key sounds, whereby the user only needs to press the OK key again to select this function or press Ignore, if he does not want to switch the key sounds on.

In order to form a frequency array for modelling the linked function groups or the sequence of functions, the device continuously follows the functions selected by the user and saves information on which operations the user selects consecutively within a certain short period of time, for instance during one minute. It is then not expected that the user would select certain functions always in the same order. For example, the consecutive switching off of the key sounds and sound alarm and the activation of the call transfer in this order are statistically, as a function group, the same as the switching off of the sound alarm followed by the switching off of the key sounds and the activation of the call transfer in this order, within the specified period.

It is common that the user frequently needs functions of the ON-OFF type in his device, such as switching the call transfer on and off. Because the switching on is always at some next stage followed by switching off and vice versa, the user uses both of these functions equally often. Thus the Most Used Menu should have two alternatives with the same frequency: switching on and off. However, this is not practical, because when the call transfer is switched on, the only possible function is switching it off and vice versa. Therefore it is recommended to arrange the MUM according to the invention practically so that the device examines which of the ON-OFF statees is in use and shows in the Most Used Menu only the alternative for changing the state. There can also be more than two mutually exclusive alternatives, that is, there may be the alternatives A, B, C and D available for a function, and only one of them, a function or a group of functions, is possible at a time.

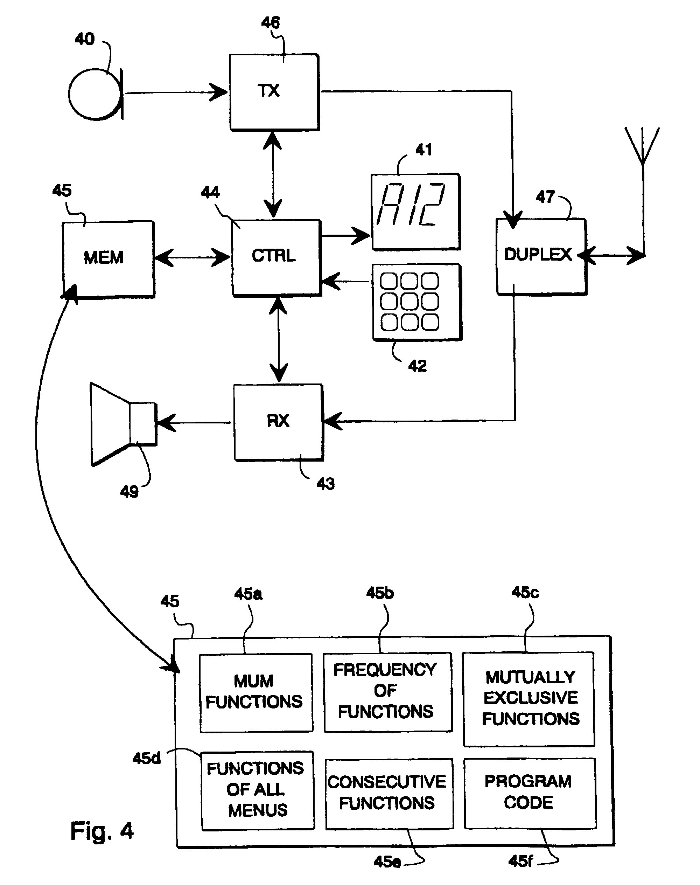

Figure 4 shows a simplified block diagram of a mobile station. The microphone 40, the transmission block 46, the duplexing block 47, the reception block 43 and the speaker 49 can be of the prior art kind, as well as the display 41, in which the mobile station shows the user the function menus, among other things, and the keypad 42, by which the user gives the mobile station key commands. The control block 44 is preferably a well known microprocessor, which controls the operation of the mobile station by executing a program saved in the memory 45. The memory 45 can be an integral part of the mobile station, or it can be partly located in a separate storage medium, such as a SIM card (Subscriber Identity Module). The lower part of the Figure shows the contents of the memory 45 in more detail. The block 45a contains the names and/or other identification codes of the functions which form the Most Used Menu at a time. The block 45b is an array, which contains the values describing the frequency of use of each function. On the basis of the values contained in block 45b, the mobile station can maintain the MUM automatically. The block 45c contains information of mutually exclusive functions, of which it is practical to have only one or a certain smaller group at a time in the Most Used Menu. Using the block 45 takes place so that always before showing the Most Used Menu or a part of in the display, the mobile station checks the functions of the MUM one by one by comparing them to the contents of the block 45c. If it appears for a function that in the present situation it is not possible or practical to show it in the MUM, it is left out of it for the time being.

Block 45d contains the whole menu structure, that is, all the functions of all the menus and information of their mutual relations (which functions belong to which menu etc.). This is the necessary basis that enables showing menus to users. Block 45e contains the links between consecutive operations, or in other words, information of the groups or chains of operations which the user often uses in connection with one another. The block 45e can be arranged in two parts (not shown in the figure) so that the first part only comprises those function groups which include functions used at least three times in connection with one another during the last two weeks, for example; these are mutually linked functions, whereby as a result of performing one of them, the mobile station immediately offers the user the next function of the same group. The second part can comprise those function groups which include functions used once or twice in connection with one another during the last two weeks; these groups are "candidates" for the first part, and they are moved to it if the detected frequency of use of the functions in connection with one another grows high enough. The block 45f contains, in a known manner, a program code by which the control block 44 controls the operation of the mobile station. Naturally, the memory 45 can also contain a lot of other information.

Many modern, portable communication devices provide various program applications which are not related to the actual use of the mobile station in the same way as the properties mentioned above, such as setting the sound alarm and the key sounds and using the call transfer. Examples of such applications include an internet connection, teleshopping, telebanking, calendar and games. The invention can also be applied in connection with the program applications, either so that commands relating to the applications are in the same Most Used Menu as the menu options relating to the normal use of the mobile station, or so that there are separate Most Used Menus for the program applications and the normal use properties. Combining into the same menu can take place directly, whereby all the functions and application commands are in the menu in an absolute order by the frequency of use or in an user-specified order, or, for example, ordered by the principle shown in Figure 2b, whereby pressing an "up" arrow key from the "topmost" function of the MUM (function A₁ in Figure 2b) is browsing towards the program applications, and pressing a "down" arrow key is browsing towards the functions related to the normal use properties.

The invention provides an advantage as compared to the prior art, because the number of keystrokes or other commands required by the most frequent functions in controlling the electronic device is reduced. In addition, the degree of necessity and generality of the functions can be personally decided by each user. It is clear to a person skilled in the art that the key commands named above, such as pressing the Menu and OK keys, are used by way of example and do not limit the invention. Many different methods of giving commands are known in the technology of devices controlled by key commands, which methods can be applied in the case of the present invention. In addition, there are voice-controlled electronic devices, to which the invention can also be applied, whereby the opening of the Most Used Menu is performed by a certain speech command, and moving the cursor in the menu and selecting a certain option are performed by other speech commands.

## Claims

1. A man-machine interface for controlling an electronic device, which interface comprises menus for showing alternative functions to the user, **characterized** in that it comprises a certain menu for showing the options (A₁ - A_{N}, - B₁ - B_{N}) which shoud be the most easily selected, whereby the options contained in said menu are determined on the basis of the user's operation.

2. A method for implementing the interaction between the electronic device and its user in an electronic device, in which method options are shown in the form of menus, **characterized** in that as a response to the user's operation, certain options intended to be the most easily selected (A₁ - A_{N}, B₁ - B_{N}) are collected to a certain menu.

3. A method according to Claim 2, **characterized** in that said options intended to be the most easily selected are determined as a response to commands given by the user for selecting certain options (21, 22).

4. A method according to Claim 2, **characterized** in that said options intended to be the most easily selected are determined on the basis of how often the user selects each option (11).

5. A method according to Claim 3 or 4, **characterized** in that while the options intended to be the most easily selected comprise at least two mutually exclusive options, said menu shows only those of the mutually exclusive options which are possible to perform in the state of operation of the device at the moment.

6. A method according to any one of the Claims 2 to 5, **characterized** in that as a response to a command given by the user, which command corresponds to selecting a certain first option from said menu, the next option shown by the device is the one which on the basis of previous use is the most likely to follow said first option.

7. A mobile station arranged to show function options as a response to control commands, **characterized** in that it is equipped (45a) to specify a certain group of most often used functions and to display (41) these functions in a certain menu of the most used functions as a response to a certain first control command.

8. A mobile station according to Claim 7, **characterized** in that it is also equipped to perceive that certain functions are repeatedly used in connection with one another, and to form linked groups of these functions (45c), whereby as a response to the user's selection and execution of a function belonging to a linked function group, the mobile station offers the user another function belonging to the same linked function group.

9. A mobile station according to Claim 7, **characterized** in that in the case of mutually exclusive functions (45c), it shows in said menu of the most used functions only the functions that can be performed in the state of operation at the moment.
